# EUROPÄISCHE PATENTSCHRIFT

(11) **EP 2 197 941 B1**
(45) Veröffentlichungstag und Bekanntmachung des Hinweises auf die Patenterteilung: **25.05.2011**
(21) Anmeldenummer: 08837716.3
(22) Anmeldetag: 08.10.2008
(51) Int. Cl.: C08G 83/00, C09D 179/00

(54) **VERWENDUNG HOCHFUNKTIONELLER, HOCHVERZWEIGTER POLYETHERAMINPOLYOLE ZUR BESCHICHTUNG VON OBERFLÄCHEN**
USE OF HIGHLY FUNCTIONAL, HIGHLY BRANCHED POLYETHERAMINE POLYOLS FOR COATING SURFACES
UTILISATION DE POLYÉTHERAMINE-POLYOLS TRÈS RAMIFIÉS À HAUTE FONCTIONNALITÉ POUR RECOUVRIR DES SURFACES

(30) Priorität: 09.10.2007 EP 07118076
(43) Veröffentlichungstag der Anmeldung: 23.06.2010
(73) Patentinhaber: BASF SE, 67056 Ludwigshafen (DE)
(72) Erfinder: BRUCHMANN, Bernd, 67251 Freinsheim (DE); SCHOENFELDER, Daniel, 68161 Mannheim (DE); DIETSCHE, Frank, 69198 Schriesheim (DE); WAGNER, Eva, 67098 Bad Duerkheim (DE); SCHWALM, Reinhold, 67157 Wachenheim (DE); KACZUN, Juergen, 67157 Wachenheim (DE)
(86) Internationale Anmeldenummer: PCT/EP2008/063476
(87) Internationale Veröffentlichungsnummer: WO 2009/047269

(56) Entgegenhaltungen:
- EP-A- 0 441 198
- DE-A1- 4 104 834
- US-A- 4 404 362
- US-A- 4 459 220
- US-A- 4 931 065
- US-A- 5 015 754
- US-A- 5 234 626
- US-A- 5 393 463

## Beschreibung

Die vorliegende Erfindung betrifft die Verwendung von hochverzweigten Polyetheraminpolyolen, die eine Vielzahl von funktionellen Gruppen tragen, insbesondere auf Basis von Dialkanol- und/oder Trialkanolaminen, zur Beschichtung von Substraten, insbesondere von Oberflächen aus Kunststoff, Holz, Glas, keramischen Materialien, textilen Materialien oder Metall.

Die hochfunktionellen, hochverzweigten Polyetheraminpolyole können als Haftvermittler (Primer), Thixotropiermittel, Fließverbesserer oder als Bausteine zur Herstellung von Polyadditions- oder Polykondensationspolymeren, zum Beispiel von Lacken, Überzügen, Klebstoffen, Dichtmassen, Elastomeren oder Schaumstoffen technisch vorteilhaft eingesetzt werden. Weiterhin können sie als Haftvermittler (Primer), Fließverbesserer oder Thixotropiermittel zur Herstellung von Lacken, Überzügen, Klebstoffen, Dichtmassen oder Schaumstoffen auf Basis von Polymeren, die auf Basis von Polymerisationen erhalten werden können, technisch vorteilhaft eingesetzt werden.

Verschiedene Haftvermittler ("Primer") werden in WO 2005/089480 beschrieben, wobei hier lineare oder verzweigte Polyethylenimine mit Molekulargewichten von unter 10.000 zusammen mit einem Lösungsmittel auf eine Oberfläche aufgebracht werden.

Polyetheraminpolyole werden bekanntermaßen aus Trialkanolaminen, wie zum Beispiel Triethanolamin, Tripropanolamin, Triisopropanolamin, gegebenenfalls auch in Mischung mit Mono- oder Dialkanolaminen erhalten, indem diese Monomere unter Katalyse, z.B. saurer oder basischer Katalyse, unter Wassereliminierung verethert werden.

Die Herstellung dieser Polymere wird zum Beispiel in den Patenten US 2,178,173, US 2,290,415, US 2,407,895 und DE 40 03 243 beschrieben. Die Polymerisation kann entweder statistisch erfolgen oder es können Blockstrukturen aus einzelnen Alkanolaminen hergestellt werden, die in einer weiteren Reaktion miteinander verknüpft werden (siehe US 4,404,362).

Die in der Literatur beschriebenen Polyetheraminpolyole werden in freier oder quaternisierter Form zum Beispiel als Demulgatoren für Öl/Wasser-Gemische, als Nachbehandlungsmittel für gefärbte Leder (siehe DE 41 04 834) oder als Schmiermittel für die Metallverarbeitung (siehe CS 265929) eingesetzt.

In der Literatur wurden ferner verschiedene Verfahren zum Aufbringen einer Schutzschicht auf diversen Substraten beschrieben. In der prioritätsälteren, unveröffentlichten Patentanmeldung EP-06113119.9 wird ein Verfahren zum Aufbringen von Korrosionsschutzschichten aus polymeren Materialien auf einer metallischen Oberfläche beispielsweise durch "Coil-Coating" beschrieben.

Der vorliegenden Erfindung lag es als eine Aufgabe zugrunde, Beschichtungen für diverse Substrate (metallische und nicht-metallische) bereitzustellen, die auf speziellen Polyetheraminpolyolen basieren, die mittels technisch einfachen und preiswerten Verfahren als hochfunktionelle und hochverzweigte Polymere hergestellt werden können, und deren Strukturen sich leicht an die Erfordernisse der jeweiligen Beschichtung anpassen lassen.

Die Beschichtungen sollen aufgrund ihres definierten Aufbaus vorteilhafte Eigenschaften, wie hohe Funktionalität, hohe Reaktivität, geringe Viskosität und gute Löslichkeit, in sich vereinen. Auch sollen sie als Haftvermittler-Komponente (Primer) bei der Herstellung von Polyadditions- oder Polykondensationspolymeren, zum Beispiel von Lacken, Überzügen, Klebstoffen, Dichtmassen, Elastomeren oder Schaumstoffen eingesetzt werden können.

Die Aufgabe kann erfindungsgemäß gelöst werden, indem spezielle hochfunktionelle und hochverzweigte Polyetheraminpolyole als Beschichtungsmaterial verwendet werden. Die vorliegende Erfindung betrifft daher die Verwendung hochfunktioneller, hochverzweigter Polyetheraminpolyole zur Beschichtung von Substraten.

Es kann sich bei den Substraten z.B. um Kunststoffe, Holz, Glas, keramischen Materialien oder Metall oder Oberflächen aus diesen Materialien handeln. Bei den Substraten kann es sich auch um textile Materialien (z.B. gewebt oder gewirkt) aus natürlichen Materialien (z.B. Wolle oder Baumwolle) und/oder synthetischen Materialien (z.B. Polyester, Polyamid) handeln.

Die Erfindung betrifft auch die Verwendung von hochfunktionellen, hochverzweigten Polyetheraminpolyolen aufgebaut aus Trialkanolamin-Monomeren und gegebenenfalls weiteren Monomer-Typen.

Bei dem hochfunktionellen, hochverzweigten Polyetheraminpolyol kann es sich bevorzugt um ein Polymer, aufgebaut aus Triethanolamin-Monomeren, Triisopropanolamin-Monomeren und/oder Tripropanolamin-Monomeren handeln.

Die Erfindung betrifft auch die Verwendung, wobei die Polymere durch Kondensation von Trialkanolamin-Monomeren unter saurer oder basischer Katalyse bei einer Temperatur von 150 bis 300° C hergestellt werden, wobei diese Kondensationsprodukte ggf. einer weiteren Derivatisierung unterzogen werden können.

Die Erfindung betrifft auch die Verwendung, wobei es sich bei dem hochfunktionellen, hochverzweigten Polyetheraminpolyol um Polymere handelt, die ein gewichtsgemitteltes Molekulargewicht von 2.000 bis 300.000 g/mol aufweisen.

Gerne wird ein Kondensationsprodukt von Triethanolamin-Monomeren und/oder Triisopropanolamin-Monomeren, insbesondere von Triethanolamin-Monomeren verwendet.

Gegenstand der Erfindung ist auch ein Verfahren zur Beschichtung von Substraten mit hochfunktionellen, hochverzweigten Polyetheraminpolyolen, bei dem auf ein gegebenenfalls (in einem oder mehreren Schritten) vorgereinigtes Substrat eine Zusammensetzung enthaltend mindestens ein hochfunktionelles, hochverzweigtes Polyetheraminpolyol aufgebracht wird.

Bei dem Verfahren ist die Menge von hochfunktionellem, hochverzweigten Polyetheraminpolyol pro Quadratmeter des Substrats von 1 mg bis 1000 g, vorzugsweise von 10 mg bis 200 g, insbesondere von 50 mg bis 150 g. Die Menge ist dabei von dem verwendeten Substrat, der Art der Zusammensetzung (z.B. als Primer) und dem Verwendungszweck abhängig.

Die Erfindung betrifft auch ein Verfahren, bei dem in der verwendeten Zusammensetzung das hochfunktionelle, hochverzweigte Polyetheraminpolyol in einer Menge von 0,1 bis 90 Gew. %, vorzugsweise von 0,5 bis 80 Gew. %, insbesondere 1 bis 70 Gew. % vorhanden ist.

Die Erfindung betrifft weiterhin ein Verfahren, bei dem in der verwendeten Zusammensetzung mindestens ein Lösungsmittel und das hochfunktionelle, hochverzweigte Polyetheraminpolyol in einer Menge von 0,5 bis 80 Gew. % vorhanden ist.

Die Erfindung betrifft auch ein Verfahren, bei dem das hochfunktionelle, hochverzweigte Polyetheraminpolyol zum Aufbringen einer Korrosionsschutzschicht auf einer metallischen Oberfläche, insbesondere aus Eisen, Stahl, Zink- oder Zinklegierungen, Aluminium oder Aluminiumlegierungen, Kupfer oder Kupferlegierungen, appliziert wird.

Gegenstand ist auch ein Verfahren, bei dem die Dicke der durch die Beschichtung auf dem Substrat aufgebrachten Schicht von 1 nm bis 200 µm, vorzugsweise von 3 nm bis 200 µm und insbesondere von 10 nm bis 100 µm beträgt.

Die Erfindung betrifft auch ein Substrat, welches mit einer Beschichtung, erhältlich durch ein Verfahren wie oben beschrieben, versehen ist.

Bei dem Substrat kann es sich auch um eine metallische Oberfläche, z.B. aus Eisen, Stahl, Zink- oder Zinklegierungen, Aluminium oder Aluminiumlegierungen, Kupfer oder Kupferlegierungen handeln. Es kann sich jedoch auch um ein textiles Material handeln. Das Substrat kann auch eine Oberfläche aus Kunststoff, Holz, keramischem Material oder Glas aufweisen.

Die Erfindung betrifft auch ein Substrat, welches mit mehreren Schichten, beispielsweise 2 bis 20, insbesondere 2 bis 8 Schichten, überzogen ist. Die Polymerschichten können dabei gleich oder verschieden sein.

Bei dem Substrat kann es sich z.B. um einen Metallformkörper, ein Metallband, eine Automobilkarosserie oder ein Karosserieteil handeln. Bei dem Substrat kann es sich auch um ein Kunststoff-Formteil (z.B. aus ABS, Polyamid), eine Folie (z.B. aus Polyester) oder ein Granulat handeln.

Unter einem hochfunktionellen Polyetheraminpolyol ist im Rahmen dieser Erfindung ein polymeres Produkt zu verstehen, das neben den Ethergruppen und den Aminogruppen, die das Polymergerüst bilden, end- und/oder seitenständig weiterhin mindestens drei, bevorzugt mindestens sechs, mehr bevorzugt mindestens zehn funktionelle Gruppen aufweist. Funktionelle Gruppen sind z.B. Hydroxy- oder Aminogruppen.

Bei den funktionellen Gruppen handelt es sich häufig um OH-Gruppen. Die Anzahl der end- oder seitenständigen funktionellen Gruppen ist prinzipiell nach oben nicht beschränkt, jedoch können Produkte mit sehr hoher Anzahl funktioneller Gruppen unerwünschte Eigenschaften, wie beispielsweise hohe Viskosität oder schlechte Löslichkeit, aufweisen. Die hochfunktionellen Polyetheraminpolyole der vorliegenden Erfindung weisen zumeist nicht mehr als 500 end- oder seitenständige funktionelle Gruppen, bevorzugt nicht mehr als 100 end- oder seitenständige funktionelle Gruppen auf.

Als Ausgangsmaterial kann Triethanolamin, Tripropanolamin, Triisopropanolamin oder Tributanolamin eingesetzt werden, gegebenenfalls in Kombination mit Dialkanolaminen, wie Diethanolamin, Dipropanolamin, Diisopropanolamin, Dibutanolamin, N,N'-Dihydroxyalkyl-piperidin (alkyl = C1 - C8), oder in Kombination mit Di- oder höherfunktionellen Polyetherolen auf Basis von Ethylenoxid und/oder Propylenoxid umgesetzt werden. Vorzugsweise wird jedoch Triethanolamin und Triisopropanolamin oder deren Gemisch als Ausgangsprodukt verwendet.

Die nach dem Verfahren gebildeten hochfunktionellen hochverzweigten Polyetheramine sind nach der Reaktion, also ohne weitere Modifikation, mit Hydroxylgruppen terminiert. Der Begriff hochverzweigt bedeutet, dass die polymeren Ketten in hohem Ausmaß miteinander verbunden sind und ein dreidimensionales Gerüst bilden.

Die Polyetheraminpolyole lösen sich gut in verschiedenen Lösemitteln, wie Wasser, Alkoholen, wie Methanol, Ethanol, Butanol, Alkohol/Wasser-Mischungen, Aceton, 2-Butanon, Essigester, Butylacetat, Methoxypropylacetat, Methoxyethylacetat, Tetrahydrofuran, Dimethylformamid, Dimethylacetamid, N-Methylpyrrolidon, Ethylencarbonat oder Propylencarbonat.

Weitere Beispiele für Lösungsmittel, die zur Herstellung von Zusammensetzungen mit den beschriebenen Polymeren eingesetzt werden können, sind aromatische und/oder (cyclo)aliphatische Kohlenwasserstoffe und deren Gemische, halogenierte Kohlenwasserstoffe, Ketone, Ester und Ether. Bevorzugt sind aromatische Kohlenwasserstoffe, (cyclo)aliphatische Kohlenwasserstoffe, Alkansäurealkylester, Ketone, alkoxylierte Alkansäurealkylester und deren Gemische. Besonders bevorzugt sind ein- oder mehrfach alkylierte Benzole und Naphthaline, Ketone, Alkansäurealkylester und alkoxylierte Alkansäurealkylester sowie deren Gemische.

Als aromatische Kohlenwasserstoffgemische sind solche bevorzugt, die überwiegend aromatische C₇- bis C₁₄-Kohlenwasserstoffe umfassen und einen Siedebereich von 110 bis 300°C umfassen können, besonders bevorzugt sind Toluol, o-, m- oder p-Xylol, Trimethylbenzolisomere, Tetramethylbenzolisomere, Ethylbenzol, Cumol, Tetrahydronaphthalin und solche enthaltende Gemische. Beispiele dafür sind die Solvesso®-Marken der Firma ExxonMobil Chemical, besonders Solvesso® 100 (CAS-Nr. 64742-95-6, überwiegend C₉ und C₁₀-Aromaten, Siedebereich etwa 154 - 178°C), 150 (Siedebereich etwa 182 - 207°C) und 200 (CAS-Nr. 64742-94-5), sowie die Shellsol®-Marken der Firma Shell. Kohlenwasserstoffgemische aus Paraffinen, Cycloparaffinen und Aromaten sind auch unter den Bezeichnungen Kristallöl (beispielsweise Kristallöl 30, Siedebereich etwa 158 - 198°C oder Kristallöl 60: CAS-Nr. 64742-82-1), Testbenzin (beispielsweise ebenfalls CAS-Nr. 64742-82-1) oder Solventnaphtha (leicht: Siedebereich etwa 155 bis 180°C, schwer: Siedebereich etwa 225 - 300°C,) im Handel erhältlich.

Halogenierte Kohlenwasserstoffe sind beispielsweise Chlorbenzol und Dichlorbenzol oder dessen Isomerengemische. Die Ester sind beispielsweise n-Butylacetat, Ethylacetat, 1-Methoxypropylacetat-2 und 2-Methoxyethylacetat. Die Ether sind beispielsweise THF, Dioxan sowie die Dimethyl-, -ethyl- oder -n-butylether von Ethylenglykol, Diethylenglykol, Triethylenglykol, Propylenglykol, Dipropylenglykol oder Tripropylenglykol.
Als Ketone sind beispielsweise Aceton, 2-Butanon, 2-Pentanon, 3-Pentanon, Hexanon, Isobutylmethylketon, Heptanon, Cyclopentanon, Cyclohexanon oder Cycloheptanon zu nennen.

(Cyclo)aliphatische Kohlenwasserstoffe sind beispielsweise Dekalin, alkyliertes Dekalin und Isomerengemische von geradlinigen oder verzweigten Alkanen und/oder Cycloalkanen.

Die Herstellung der Polyetheraminpolyole erfolgt nach im Prinzip bekannten Verfahren entweder in Substanz oder in Lösung. Als Lösungsmittel kommen die bereits oben angeführten Lösungsmittel in Frage. Es stellt eine bevorzugte Ausführungsform dar, die Reaktion ohne Lösungsmittel durchzuführen.

Die Temperatur bei der Herstellung sollte ausreichend hoch für die Umsetzung des Aminoalkohols sein. In der Regel wird für die Umsetzung eine Temperatur von 100°C bis 350°C, bevorzugt 150 bis 300, besonders bevorzugt 180 bis 280°C und speziell 220 bis 240°C benötigt.

Nach der Umsetzung erfolgt bevorzugt ein Entfernen bzw. Ausblasen der Monomere.

In einer bevorzugten Ausführungsform wird die Kondensationsreaktion mit Triethanolamin oder Triisopropanolamin in Substanz durchgeführt. Das bei der Reaktion freiwerdende Wasser oder niedermolekulare Reaktionsprodukte können zur Beschleunigung der Reaktion aus dem Reaktionsgleichgewicht entfernt werden, z.B. destillativ, gegebenenfalls auch bei vermindertem Druck. Die Abtrennung des Wassers oder der niedermolekularen Reaktionsprodukte kann auch durch Durchleiten eines unter den Reaktionsbedingungen im wesentlichen inerten Gasstromes (Strippen), wie z.B. Stickstoff oder Edelgas, zum Beispiel Helium, Neon oder Argon, unterstützt werden.

Zur Beschleunigung der Reaktion können auch Katalysatoren oder Katalysatorgemische zugegeben werden. Geeignete Katalysatoren sind Verbindungen, die Veretherungs- oder Umetherungsreaktionen katalysieren, z.B. Alkalihydroxide, Alkalicarbonate, Alkalihydrogencarbonate, vorzugsweise des Natriums, Kaliums oder Cäsiums, saure Verbindungen wie Eisenchlorid oder Zinkchlorid, Ameisensäure, Oxalsäure oder phosphorhaltige saure Verbindungen, wie Phosphorsäure, Polyphosphorsäure, Phosphorige Säure oder Unterphosphorige Säure. Vorzugsweise werden Phosphorsäure, Phosphorige Säure oder Unterphosphorige Säure, gegebenenfalls in mit Wasser verdünnter Form, eingesetzt.

Die Zugabe des Katalysators erfolgt im allgemeinen in einer Menge von 0,001 bis 10 Mol-%, bevorzugt von 0,005 bis 7, besonders bevorzugt 0,01 bis 5 Mol-% bezogen auf die Menge des eingesetzten Alkanolamins oder Alkanolamingemisches.

Ferner ist es auch möglich, sowohl durch Zugabe des geeigneten Katalysators, als auch durch Wahl einer geeigneten Temperatur die intermolekulare Polykondensationsreaktion zu steuern. Weiterhin lässt sich über die Zusammensetzung der Ausgangskomponenten und über die Verweilzeit das mittlere Molekulargewicht des Polymeren einstellen.

Die Polymere, die bei erhöhter Temperatur hergestellt werden, sind bei Raumtemperatur üblicherweise über einen längeren Zeitraum, beispielsweise über mindestens 6 Wochen, stabil, ohne Trübungen, Ausfällungen und/oder einen deutlichen Viskositätsanstieg zu zeigen.

Zum Abbruch der intermolekularen Polykondensationsreaktion gibt es verschiedene Möglichkeiten. Beispielsweise kann die Temperatur auf einen Bereich abgesenkt werden, in dem die Reaktion zum Stillstand kommt und das Polykondensationsprodukt lagerstabil ist. Dies ist in der Regel unterhalb von 60°C, bevorzugt unter 50°C, besonders bevorzugt unterhalb von 40°C und ganz besonders bevorzugt bei Raumtemperatur der Fall. Weiterhin ist es möglich, den Katalysator zu desaktivieren, bei basischen Katalysatoren z.B. durch Zugabe einer sauren Komponente, beispielsweise einer Lewis-Säure oder einer organischen oder anorganischen Protonensäure, bei sauren Katalysatoren durch Zugabe einer basischen Komponente, z.B. einer Lewis-Base oder einer organischen oder anorganischen Base. Ferner ist es möglich, die Reaktion durch Verdünnen mit einem gekühlten Lösungsmittel zu stoppen. Dies ist insbesondere dann bevorzugt, wenn man die Viskosität des Reaktionsgemischs durch Zugabe von Lösungsmittel anpassen muss.

Die erfindungsgemäßen hochfunktionellen hochverzweigten Polyetheraminpolyole weisen in der Regel eine Glasübergangstemperatur von weniger als 50°C, bevorzugt weniger als 30 und besonders bevorzugt weniger als 10°C auf.

Die OH-Zahl beträgt meist 100 mg KOH/g oder mehr, bevorzugt 150 mg KOH/g oder mehr.

Das gewichtsmittlere Molgewicht M_{w} liegt zumeist zwischen 1.000 und 500.000, bevorzugt von 2.000 bis 300.000 und insbesondere von 5.000 bis 300.000 g/mol.

Das zahlenmittlere Molgewicht Mₙ beträgt zwischen 500 und 50.000, bevorzugt zwischen 1.000 und 40.000 g/mol, gemessen mittels Gelpermeationschromatographie mit Hexafluorisopropanol als mobiler Phase und Polymethymethacrylat (PMMA) als Standard.

Die Herstellung der erfindungsgemäßen hochfunktionellen Polyetheramin-polyole erfolgt häufig in einem Druckbereich von 0,1 mbar bis 20 bar, bevorzugt bei 1 mbar bis 5 bar, in Reaktoren oder Reaktorkaskaden, die im "Batch-Betrieb", halbkontinuierlich oder kontinuierlich betrieben werden.

Durch die vorgenannte Einstellung der Reaktionsbedingungen und gegebenenfalls durch die Wahl des geeigneten Lösemittels können die erfindungsgemäßen Produkte nach der Herstellung ohne weitere Reinigung weiterverarbeitet werden.

Falls erforderlich kann das Reaktionsgemisch einer Entfärbung, beispielsweise durch Behandlung mit Aktivkohle oder Metalloxiden, wie z.B. Aluminiumoxid, Siliciumoxid, Magnesiumoxid, Zirkonoxid, Boroxid oder Gemischen davon, in Mengen von beispielsweise 0,1 bis 50 Gew.-%, bevorzugt 0,5 bis 25 Gew.-%, besonders bevorzugt 1 bis 10 Gew.-% bei Temperaturen von beispielsweise 10 bis 100°C, bevorzugt 20 bis 80°C und besonders bevorzugt 30 bis 60°C unterworfen werden.

Gegebenenfalls kann das Reaktionsgemisch auch zur Entfernung von eventuell vorhandenen Ausfällungen filtriert werden. Häufig wird das Produkt gestrippt, das heißt von niedermolekularen, flüchtigen Verbindungen befreit. Dazu kann nach Erreichen des gewünschten Umsatzgrades der Katalysator optional desaktiviert und die niedermolekularen flüchtigen Bestandteile, zum Beispiel Wasser, die als Einsatzstoff verwendeten Aminoalkohole oder leichtflüchtige oligomere oder cyclische Verbindungen destillativ, gegebenenfalls unter Einleitung eines Gases, vorzugsweise Stickstoff, oder Edelgase, gegebenenfalls bei vermindertem Druck, entfernt werden.

Die gemäß den genannten Verfahren erhaltenen hochfunktionellen, hochverzweigten Polyetheraminpolyole können für Beschichtungen auf verschiedenen Substraten verwendet werden.

Sie können auch als Haftvermittler (Primer), Thixotropiermittel, Fließverbesserer oder als Bausteine zur Herstellung von Polyadditions- oder Polykondensationspolymeren, zum Beispiel von Lacken, Überzügen, Klebstoffen, Dichtmassen, Giesselastomeren oder Schaumstoffen vorteilhaft eingesetzt werden. Weiterhin können sie als Haftvermittler (Primer), Fließverbesserer oder Thixotropiermittel zur Herstellung von Lacken, Überzügen, Klebstoffen, Dichtmassen oder Schaumstoffen auf Basis von Polymeren, die auf Basis von Polymerisationen erhalten werden können, technisch vorteilhaft eingesetzt werden.

In einer weiteren Ausführungsform der vorliegenden Erfindung können die Polyetheraminpolyole als Fließhilfsmittel zur Verbesserung der Rheologie von Lacken, beispielsweise von Klar- und Decklacken, eingesetzt werden.

Die Polyetheraminpolyole können als Bindemittelkomponente, beispielsweise in Beschichtungsmassen, gegebenenfalls gemeinsam mit anderen Hydroxy- oder Aminogruppen aufweisenden Bindemitteln, wie z.B. mit Hydroxy(meth)acrylaten, Hydroxystyryl(meth)acrylaten, linearen oder verzweigten Polyestern, Polyethern, Polycarbonaten, Melaminharzen oder Harnstoff-Formaldehydharzen, zusammen mit gegenüber Carboxy- und/oder Hydroxyfunktionen reaktiven Verbindungen eingesetzt werden, beispielsweise mit Isocyanaten, verkappten Isocyanaten, Epoxiden und/oder Aminoplasten, bevorzugt Isocyanaten, Epoxiden oder Aminoplasten, besonders bevorzugt mit Isocyanaten oder Epoxiden und ganz besonders bevorzugt mit Isocyanaten.

Isocyanate sind beispielsweise aliphatische, aromatische und cycloaliphatische Di- und Polyisocyanate mit einer mittleren NCO-Funktionalität von mindestens 1,8, bevorzugt 1,8 bis 5 und besonders bevorzugt 2 bis 4, sowie deren Isocyanurate, Oxadiazintrione, Iminooxadiazindione, Harnstoffe, Biurete, Amide, Urethane, Allophanate, Carbodiimide, Uretonimine und Uretdione. Bei den Diisocyanaten handelt es sich bevorzugt um Isocyanate mit 4 bis 20 C-Atomen. Es können auch Gemische von Diisocyanaten vorliegen.

Als Polyisocyanate kommen Isocyanuratgruppen aufweisende Polyisocyanate, Uretdiondiisocyanate, Biuretgruppen aufweisende Polyisocyanate, Amidgruppen aufweisende Polyisocyanate, Urethan- oder Allophanatgruppen aufweisende Polyisocyanate, Oxadiazintriongruppen oder Iminooxadiazindiongruppen enthaltende Polyisocyanate, Carbodiimid- oder Uretonimin-modifizierte Polyisocyanate von geradlinigen oder verzweigten C₄-C₂₀-Alkylendiisocyanaten, cycloaliphatischen Diisocyanaten mit insgesamt 6 bis 20 C-Atomen oder aromatischen Diisocyanaten mit insgesamt 8 bis 20 C-Atomen oder deren Gemische in Betracht. Die einsetzbaren Di- und Polyisocyanate haben bevorzugt einen Gehalt an Isocyanatgruppen (berechnet als NCO, Molekulargewicht = 42) von 1 bis 60 Gew.-% bezogen auf das Di- und Polyisocyanat(gemisch), bevorzugt 2 bis 60 Gew.-% und besonders bevorzugt 10 bis 55 Gew.-%. Bevorzugt sind aliphatische bzw. cycloaliphatische Di- und Polyisocyanate, oder deren Mischungen. Besonders bevorzugt ist Hexamethylendiisocyanat oder Isophorondiisocyanat als Isocyanat-Baustein.

Als Mischungskomponente sind bevorzugt geeignet:
a) Isocyanuratgruppen aufweisende Polyisocyanate von aromatischen, aliphatischen und/oder cycloaliphatischen Diisocyanaten.
b) Uretdiondiisocyanate mit aromatisch, aliphatisch und/oder cycloaliphatisch gebundenen Isocyanatgruppen.
c) Biuretgruppen aufweisende Polyisocyanate mit aromatisch, cycloaliphatisch oder aliphatisch gebundenen Isocyanatgruppen.
d) Urethan- und/oder Allophanatgruppen aufweisende Polyisocyanate mit aromatisch, aliphatisch oder cycloaliphatisch gebundenen Isocyanatgruppen.
e) Oxadiazintriongruppen enthaltende Polyisocyanate.
f) Iminooxadiazindiongruppen enthaltende Polyisocyanate.
g) Carbodiimid- und/oder Uretonimin-modifizierte Polyisocyanate.

Die Polyisocyanate a) bis g) können mit den Polyetheraminopolyolen im Gemisch, gegebenenfalls auch im Gemisch mit Diisocyanaten, eingesetzt werden.

Die Isocyanatgruppen der Di- oder Polyisocyanate können auch in verkappter Form vorliegen. Als Verkappungsmittel für NCO-Gruppen eignen sich z.B. Oxime, Phenole, Imidazole, Pyrazole, Pyrazolinone, Triazole, Diketopiperazine, Caprolactam oder Malonsäureester. Unter Verkappungs- bzw. Blockierungsmitteln werden dabei Verbindungen verstanden, die Isocyanatgruppen in blockierte (verkappte bzw. geschützte) Isocyanatgruppen umwandeln, die dann unterhalb der sogenannten Deblockierungstemperatur nicht die üblichen Reaktionen einer freien Isocyanatgruppe zeigen. Solche Verbindungen mit blockierten Isocyanatgruppen kommen üblicherweise in Dual-Cure-Beschichtungsmitteln oder in Pulverlacken zur Anwendung, die über Isocyanatgruppenhärtung endgehärtet werden.

Epoxidverbindungen sind solche mit mindestens einer, bevorzugt mit mindestens zwei, besonders bevorzugt zwei bis zehn Epoxidgruppen im Molekül. In Betracht kommen z.B. epoxidierte Olefine, Glycidylester (z.B. Glycidyl(meth)acrylat) von gesättigten oder ungesättigten Carbonsäuren oder Glycidylether aliphatischer oder aromatische Polyole. Derartige Produkte werden im Handel in großer Zahl angeboten. Besonders bevorzugt sind Polyglycidylverbindungen vom Bisphenol A-, -F- oder -B-Typ und Glycidylether mehrfunktioneller Alkohole, z.B. des Butandiol, des 1,6-Hexandiol, des Glycerin und des Pentaerythrit. Beispiele für derartige Polyepoxidverbindungen sind Epikote^{®} 812 (Epoxidwert: ca. 0,67 mol/100g) und Epikote^{®} 828 (Epoxidwert: ca. 0,53 mol/100g), Epikote^{®} 1001, Epikote^{®} 1007 und Epikote^{®} 162 (Epoxidwert: ca. 0,61 mol/100g) der Firma Resolution, Rütapox® 0162 (Epoxidwert: ca. 0,58 mol/100g), Rütapox^{®} 0164 (Epoxidwert: ca. 0,53 mol/100g) und Rütapox^{®} 0165 (Epoxidwert: ca. 0,48 mol/100g) der Firma Bakelite AG, Araldit^{®} DY 0397 (Epoxidwert: ca. 0,83 mol/100g) der Firma Vantico AG.

Weiterhin kommen als Mischungskomponenten Verbindungen mit aktiven Methylol- oder Alkylalkoxygruppen, insbesondere Methylalkoxygruppen in Frage, wie z.B. veretherte Umsetzungsprodukte von Formaldehyd mit Aminen, wie Melamin, Harnstoff etc., Phenol/Formaldehydaddukte, Siloxan oder Silangruppen und Anhydride, wie sie z.B. in US 5,770,650 beschrieben sind.

Unter den technisch weit verbreiteten und bekannten, bevorzugten Aminoplasten sind besonders bevorzugt Harnstoffharze und Melaminharze, wie z.B. Harnstoff-Formaldehyd-Harze, Melamin-Formaldehyd-Harze, Melamin-Phenol-Formaldehyd-Harze oder Melamin-Harnstoff-Formaldehyd-Harze, verwendbar. Als Harnstoffharze sind solche geeignet, die durch Umsetzung von Harnstoffen mit Aldehyden erhältlich sind und gegebenenfalls modifiziert werden können. Als Harnstoffe sind Harnstoff, N-substituierte oder N,N'-disubstituierte Harnstoffe geeignet wie z.B. N-Methylharnstoff, N-Phenylharnstoff oder N,N'-Dimethylharnstoff.

Harnstoffharze können gegebenenfalls teilweise oder vollständig modifiziert werden, z.B. durch Umsetzung mit mono- od. polyfunktionellen Alkoholen, Ammoniak bzw. Aminen (kationisch modifizierte Harnstoffharze) oder mit (Hydrogen)sulfiten (anionisch modifizierte Harnstoffharze), insbesondere geeignet sind die alkoholmodifizierten Harnstoffharze.

Als Alkohole kommen für die Modifizierung C₁-C₆-Alkohole in Frage, bevorzugt C₁-C₄-Alkohol und insbesondere Methanol, Ethanol, iso-Propanol, n-Propanol, n-Butanol, isoButanol und sekundäres Butanol.

Als Melaminharze, die zusammen mit den Polyetheraminpolyolen eingesetzt werden können, sind solche geeignet, die durch Umsetzung von Melamin mit Aldehyden erhältlich sind, und die gegebenenfalls teilweise oder vollständig modifiziert werden können. Als Aldehyde sind dabei insbesondere Formaldehyd, Acetaldehyd, Iso-Butyraldehyd und Glyoxal geeignet.

Melamin-Formaldehyd-Harze sind Reaktionsprodukte der Umsetzung von Melamin mit Aldehyden, z.B. den o.g. Aldehyden, insbesondere Formaldehyd. Gegebenenfalls werden die erhaltenen Methylol-Gruppen durch Veretherung mit den oben genannten ein- oder mehrwertigen Alkoholen modifiziert. Weiterhin können die Melamin-Formaldehyd-Harze auch wie oben beschrieben durch Reaktion mit Aminen, Aminocarbonsäuren oder Sulfiten modifiziert werden. Durch Einwirkung von Formaldehyd auf Mischungen von Melamin und Harnstoff beziehungsweise auf Mischungen aus Melamin und Phenol entstehen erfindungsgemäß ebenfalls verwendbare Melamin-Harnstoff-Formaldehyd-Harze beziehungsweise Melamin-Phenol-Formaldehyd-Harze.

Die Herstellung der genannten Aminoplaste erfolgt nach an sich bekannten Verfahren.

Besonders genannte Beispiele sind Melamin-Formaldehyd-Harze, einschließlich monomerer oder polymerer Melaminharze und teilweise oder vollständig alkylierte Melaminharze, Harnstoff-Harze, z.B. Methylolharnstoffe wie Formaldehyd-Harnstoff-Harze, Alkoxyharnstoffe wie butylierte Formaldehyd-Harnstoff-Harze, aber auch N-Methylolacrylamidemulsionen, iso-Butoxy methyl acrylamid-emulsionen, Polyanhydride, wie z.B. Polybernsteinsäureanhydrid, und Siloxane oder Silane, z.B. Dimethyldimethoxysilane.

Besonders bevorzugt sind Aminoplastharze wie Melamin-Formaldehyd-Harze oder Formaldehyd-Harnstoff-Harze.

Bei den Lacken, in denen die erfindungsgemäßen Polyetheraminpolyole als Bindemittel einsetzbar sind, kann es sich um konventionelle Basislacke, Wasserbasislacke, im wesentlichen lösemittel- und wasserfreie flüssige Basislacke (100%-Systeme), im wesentlichen lösemittel- und wasserfreie feste Basislacke (Pulverlacke und pigmentierte Pulverlacke) oder im wesentlichen lösemittelfreie, ggf. pigmentierte Pulverlackdispersionen (Pulverslurry-Basislacke) handeln. Sie können thermisch, strahlungs- oder Dual-Cure-härtbar, und selbst- oder fremdvernetzend sein.

Die hochfunktionellen, hochverzweigten Polyetheraminpolyole können für Beschichtungen von Substraten wie Kunststoff (z.B. Polypropylen, Polyester, Polyamid, PET), Metall (z.B. Stahl, Aluminium, Zink), Holz (natürlich oder verarbeitet (z.B.Pressholz)), Papier, Textilien (natürliche oder synthetische), Leder, Vlies, Glas, Keramik, mineralischen Baustoffen, wie Zement-Formsteine und Faserzementplatten eingesetzt werden, insbesondere von Kunststoffen, Holz, Metallen oder beschichteten Metallen.

Zur Beschichtung kann mit den hochfunktionellen, hochverzweigten Polyetheraminpolyole in an sich bekannter Weise erfolgen, anschließend wird ggf. zur Entfernung von vorhandenem Lösungsmittel getrocknet und gehärtet.

Die Beschichtung der verschiedenen Substrate erfolgt nach üblichen, dem Fachmann im Prinzip bekannten Verfahren (z.B. Ausstreichverfahren, Spritzen, Rakeln, Tauchen), wobei man die hochfunktionellen, hochverzweigten Polyetheraminpolyole, ggf. als Zusammensetzung (Beschichtungsmasse) formuliert auf das zu beschichtende Substrat in der gewünschten Stärke aufbringt und die flüchtigen Bestandteile entfernt. Dieser Vorgang kann gewünschtenfalls ein- oder mehrfach wiederholt werden.

Das Aufbringen auf das Substrat kann in bekannter Weise, z.B. durch Spritzen, Spachteln, Rakeln, Bürsten, Rollen, Walzen oder Gießen erfolgen. Die Beschichtungsstärke liegt bei diesem Verfahren in der Regel in einem Bereich von etwa 3 bis 1000 g/m² und vorzugsweise 10 bis 200 g/m².

Die vorliegende Erfindung wird anhand der nachfolgenden Beispiele näher erläutert.

### Beispiel A

### Allgemeine Fahrvorschrift zur Herstellung von hyperverzweigten Polyetheraminpolyolen

In einem Vierhalskolben, ausgestattet mit Rührer, Destillationsbrücke, Gaseinleitrohr und Innenthermometer, werden 2000g Triethanolamin (TEA), Triisopropanolamin (TI-PA) oder deren Mischung (Gewichtsmäßig 1:1), sowie 13,5 g unterphosphorige Säure als 50%ige wässrige Lösung, vorgelegt und das Gemisch auf 230°C erwärmt. Bei ca. 220°C setzt langsam die Bildung von Kondensat ein. Das Reaktionsgemisch wird bei 230°C über 0,2 bis 8 Stunden (siehe auch die in Tabelle 1 angegebene Zeiten) gerührt, wobei das bei der Reaktion entstandene Kondensat mittels mäßigen N2-Stroms als Strippgas über die Destillationsbrücke entfernt wird. Gegen Ende der angegebenen Reaktionszeit wird bei einem Unterdruck von 500mbar restliches Kondensat entfernt.

Nach Erreichen des gewünschten Umsatzgrades wird der Ansatz auf 140°C abgekühlt und der Druck langsam und stufenweise auf 100mbar verringert, um noch verbliebene flüchtigen Anteile zu entfernen. Das Produktgemisch wird anschließend auf Raumtemperatur abgekühlt und analysiert.

### Analytik der erfindungsgemäßen Produkte:

Die Polyetheraminpolyole werden per Gelpermeationschromatographie mit einem Refraktometer als Detektor analysiert. Als mobile Phase wird dabei Hexafluorisopropanol (HFIP) verwendet, als Standard zur Bestimmung des Molekulargewichts wird Polymethylmethacrylat (PMMA) eingesetzt. Die Bestimmung der OH-Zahl erfolgt nach DIN 53240, Teil 2.

**Tabelle 1: Einsatzstoffe und Endprodukte**

| Bsp. Nr. | Amin | Reaktionsdauer (h) | Masse Destillat (g) | Molekulargewicht GPC (g/mol) Mn Mw | OH- Zahl Produkt (mg KOH/g) nach DIN 53240, Teil 2 |
|---|---|---|---|---|---|
| 1 | TEA | 4 | 245 | 3100 | 512 |
| | | | | 8000 | |
| 2 | TEA | 4 | 260 | 4000 | 495 |
| | | | | 12700 | |
| 3 | TEA | 4 | 265 | 4500 | 460 |
| | | | | 14000 | |
| 4 | TEA | 4 | 314 | 4700 | 405 |
| | | | | 24600 | |
| 5 | TEA | 6,5 | 296 | 9000 | 360 |
| | | | | 302000 | |
| 6 | TIPA | 0,2 | 36 | 2300 | 782 |
| | | | | 2700 | |
| 7 | TIPA | 0,5 | 96 | 2700 | 615 |
| | | | | 3600 | |
| 8 | TIPA | 1 | 130 | 3100 | 603 |
| | | | | 4300 | |
| 9 | TIPA | 4 | 221 | 5500 | 429 |
| | | | | 9400 | |
| 10 | TEA / | 4 | 240 | 4700 | 442 |
| | TIPA 1:1 | | | 15800 | |

### Beispiel B Zusatz von hyperverzweigten Polyetheraminpolyolen zu Lacken:

Alle Lackmischungen werden mit einem stöchiometrischen Verhältnis von Isocyanatgruppen zu Alkoholgruppen (Index 100) bei Raumtemperatur angesetzt. Die Viskositäten werden in Butylacetat auf eine Auslaufzeit von 20 s gemäß ISO 2431 und EN 535 in einem DIN 4 Becher eingestellt.

Die Lacke werden bei Raumtemperatur mit einem Kastenrakel 180 µm nass auf ein Blech als Substrat aufgerakelt. Die Lackschichtdicke nach Trocknung beträgt im Mittel ca. 40 µm. Als Vergleichsbeispiele werden Lacke untersucht, die aus kommerziellen Rohstoffen erhalten wurden.

### Die eingesetzten Prüfmethoden:

Die Untersuchungen der Lackeigenschaften erfolgen nach 24 Stunden Lagerung der lackierten Bleche in einem Klimaraum bei 23°C und 50 % relativer Luftfeuchte.

Alle untersuchten Lacke sind nach Aushärtung bei 130°C klar und transparent.
a) Nichtflüchtiger Anteil (nfA): 1 g der Lackmischung wird eine Stunde bei 125°C im Umluftofen getrocknet und das Restgewicht bezogen auf den Anfangswert (=100%) bestimmt.
b) Auslaufzeit: Gemessen auf Basis von ISO 2431 und EN 535 im DIN 4 Becher bei Raumtemperatur. Angegeben ist die Zeitspanne vom Beginn des Ausfließens bis zum Abreißen des Flüssigkeitsfadens in Sekunden.
c) Pendeldämpfung nach König in Anzahl Schwingungen auf Grundlage von DIN EN ISO 1522.
d) Erichsen-Tiefung: Tiefungsprüfung nach DIN EN ISO 1520 in mm Tiefung.
e) Haftung mit Gitterschnitt nach DIN 53151, die Note 0 bezeichnet die Bestnote, die Note 5 die schlechteste Note. Siehe dazu auch Goldberg und Streitberger, BASF Handbuch Lackiertechnik, Vincentz-Verlag Hannover, 2002, Seite 395.
f) Aceton-Doppelhub-Test: Mit einem Aceton-getränkten Wattebausch wird so lang per Hand mit Doppelhüben gerieben bis die Lackschicht bis auf das Blech durchgerieben war. Die Anzahl der dafür nötigen Doppelhübe ist angegeben. Bei hundert Hüben wird der Versuch abgebrochen.
g) Etchtest mit Schwefelsäure: Mit einer Pipette werden 25 Tropfen auf ein Gradientenofenblech gegeben und dieses im Gradientenofen 30 Minuten bei 30-75°C geheizt. Das Blech wird danach mit Wasser abgewaschen und getrocknet. Angegeben ist die niedrigste Temperatur bei der mit dem Auge eine Anätzung festzustellen ist.

### Ergebnis der Lackuntersuchungen bei der Härtungstemperatur 130°C

Allgemein führt der Einsatz der hyperverzweigten Polyetheraminpolyole zu einer Erhöhung des nichtflüchtigen Anteils, zu einer Verbesserung der Elastizität bei vergleichbarer Härte und zu einer besseren Haftung im Gitterschnitt, (siehe Tabellen 3, 6 und 7). Weiterhin verbessern sich die Kratzbeständigkeit der Oberfläche und die Beständigkeit der Lacke gegen Chemikalien und gegen Säuren (siehe Tabelle 3).

**Tabelle 2: Einsatzstoffe und Mengen**

| Einsatzstoffe (Gew.-Teile) | Beispiel 12 (Vergleich) | Beispiel 13 | Beispiel 14 | Beispiel 15 | Beispiel 16 |
|---|---|---|---|---|---|
| Macrynal^{®} SM636 | 53,7 | 45,0 | 41,9 | 48,8 | 51,5 |
| Polymer aus Beispiel 1 | | 3,5 | | | |
| Polymer aus Beispiel 2 | | | 7,4 | 1,9 | 0,9 |
| Vestanat ® T 1890 L | 32,0 | 35,8 | 33,3 | 34,2 | 33,0 |
| Butylacetat | 41,0 | 37,0 | 36,0 | 38,0 | 38,0 |
| Nichtflüchtiger Anteil (nfA, %) | 47,4 | 49,5 | 50,7 | 48,7 | 48,6 |
| Auslaufzeit (s) | 20 | 20 | 20 | 20 | 20 |

| | | | | | |
|---|---|---|---|---|---|
| Macrynal® SM 636 (Hersteller: UCB, Belgien), Polyacrylatpolyol, 70 % in Butylacetat, OH-Zahl ca. 135 mg KOH/g Vestanat ® T 1890 L: Polyisocyanat (Hersteller: Degussa, Deutschland) auf Basis des Isocyanurats von Isophorondiisocyanat, Funktionalität zwischen 3 und 4, 70 %ige Lösung in n-Butylacetat/Solvesso 100 1:2 Basonat® HI 100: Polyisocyanat (Hersteller: BASF, Ludwigshafen) auf Basis des Isocyanurats von 1,6-Hexamethylendiisocyanat, Funktionalität zwischen 3 und 4 | | | | | |

Es wird ersichtlich, dass durch den Einsatz der Polyetheraminpolyole bei vergleichbarer Viskosität der Anteil an flüchtigen Komponenten (Lösungsmittel) verringert werden kann.

**Tabelle 3: Produkte aus Tabelle 2, Kennzahlen der Lacke (Härtung der Lacke erfolgt über 30 min bei 130°C)**

| | Beispiel 12 (Vergleich) | Beispiel 13 | Beispiel 14 | Beispiel 15 | Beispiel 16 |
|---|---|---|---|---|---|
| Schichtdicke (µm) | 36 | 42 | 39 | 43 | 38 |
| Pendeldämpfung | 148 | 148 | 145 | 148 | 150 |
| Erichsentiefung (mm) | 3,0 | 4,0 | 8,5 | 7,9 | 8,5 |
| Gitterschnitt | 5 | 5 | 3 | 5 | 4 |
| Acetontest | >100 | >100 | >100 | >100 | >100 |
| Etching-Test, Prüfung nach 24h | 61°C | 62°C | n.b. | n.b. | 66°C |

Es wird ersichtlich, dass durch den Einsatz der Polyetheraminpolyole eine zum Teil erhebliche Verbesserung der Flexibilität des Lackes sowie eine erhöhte Säurefestigkeit erreicht werden können.

**Tabelle 4: Einsatzstoffe und Mengen**

| Einsatzstoffe (Gew.-Teile) | Beispiel 17 (Vergleich) | Beispiel 18 | Beispiel 19 | Beispiel 20 | Beispiel 21 |
|---|---|---|---|---|---|
| Macrynal® SM 636 | 60,0 | 45,0 | 45,0 | 45,0 | 45,0 |
| Polymer aus Beispiel 3 (90% in Butylacetat) | | 5,7 | | | |
| Polymer aus Beispiel 4 (90% in Butylacetat) | | | 4,9 | | |
| Polymer aus Beispiel 5 (90% in Butylacetat) | | | | 5,3 | |
| Polymer aus Beispiel 6 (70% in Butylacetat) | | | | | 7,0 |
| Vestanat ® T 1890 L | 26,5 | 26,5 | 26,5 | 26,5 | 26,5 |
| Basonat® HI 100 | 4,8 | 4,8 | 4,8 | 4,8 | 4,8 |
| Butylacetat | 41,0 | 37,0 | 36,0 | 38,0 | 38,0 |
| Nichtflüchtiger Anteil (nfA, %) | 47,6% | 49,0% | 48,9% | 49,1% | 48,9% |
| Auslaufzeit (s) | 20 | 20 | 20 | 20 | 20 |

Man erkennt, dass durch den Einsatz der Polyetheraminpolyole bei gleicher Viskosität der Anteil an flüchtigen Komponenten verringert werden kann.

**Tabelle 5: Einsatzstoffe und Mengen**

| Einsatzstoffe (Gew.-Teile) | Beispiel 22 | Beispiel 23 | Beispiel 24 | Beispiel 25 |
|---|---|---|---|---|
| Macrynal® SM 636 | 45,0 | 45,0 | 45,0 | 45,0 |
| Polymer aus Beispiel 7 (70% in Butylacetat) | 8,9 | | | |
| Polymer aus Beispiel 8 (70% in Butylacetat) | | 9,1 | | |
| Polymer aus Beispiel 9 (70% in Butylacetat) | | | 9,3 | |
| Polymer aus Beispiel 10 (70% in Butylacetat) | | | | 11,6 |
| Vestanat® T 1890 L | 26,5 | 26,5 | 26,5 | 26,5 |
| Basonat® HI 100 | 4,8 | 4,8 | 4,8 | 4,8 |
| Butylacetat | 39,5 | 39.5 | 39,5 | 41,0 |
| Nichtflüchtiger Anteil (nfA, %) | 49,0% | 49,0% | 49,1% | 48,9% |
| Auslaufzeit (s) | 20 | 20 | 20 | 20 |

**Tabelle 6: Produkte aus Tabelle 4, Kennzahlen der Lacke (Härtung der Lacke erfolgt über 30 min bei 130°C)**

| | Beispiel 17 (Vergleich) | Beispiel 18 | Beispiel 19 | Beispiel 20 | Beispiel 21 |
|---|---|---|---|---|---|
| Schichtdicke (µm) | 35 | 39 | 38 | 37 | 35 |
| Pendeldämpfung | 149 | 150 | 150 | 148 | 153 |
| Erichsentiefung (mm) | 5,8 | 6,7 | 6,3 | 6,1 | 6,2 |
| Gitterschnitt | 4 | 3,5 | 1 | 2,5 | 4 |
| Acetontest | >100 | >100 | >100 | >100 | >100 |

Es wird ersichtlich, dass durch den Einsatz der Polyetheraminpolyole die Haftung des Lackes verbessert werden kann.

**Tabelle 7: Produkte aus Tabelle 5, Kennzahlen der Lacke (Härtung der Lacke erfolgt über 30 min bei 130°C, Referenz ist Beispiel 17 aus Tabelle 6)**

| | Beispiel 22 | Beispiel 23 | Beispiel 24 | Beispiel 25 |
|---|---|---|---|---|
| Schichtdicke (µm) | 39 | 35 | 38 | 36 |
| Pendeldämpfung | 146 | 151 | 150 | 146 |
| Erichsentiefung (mm) | 5,9 | 7,1 | 7,5 | 7,3 |
| Gitterschnitt | 4 | 1,5 | 4 | 2,5 |
| Acetontest | >100 | >100 | >100 | >100 |

Es wird ersichtlich, dass durch den Einsatz der Polyetheraminpolyole bei vergleichbarer Härte der Lacke die Haftung und die Flexibilität des Lackes verbessert werden kann.

### Beispiel C Viskositätsuntersuchung im Vergleich zu Polyethyleniminen

Es wird untersucht, welche Viskosität sich bei 70%igen Lösungen von Polyethyleniminen einstellt. Ferner wird geprüft, welche Viskosität dazu hyperverzweigte Polyetheramine bei vergleichbaren Molekulargewichten haben. Als Prüfsubstanzen dienen zwei handelsübliche Polyethylenimine (Hersteller: BASF, Ludwigshafen):
Lupasol WF (Hersteller: BASF, Ludwigshafen), ein Polyethylenimin mit Molekulargewicht von ca. 25.000;
Lupasol FG (Hersteller: BASF, Ludwigshafen), ein Polyethylenimin mit Molekulargewicht von ca. 800.

Prüfmethode: Brookfield-Viskosimeter Spindel 31 (0,3-60 RPM); Abweichung: 1% des Gesamtmessbereiches; Temperaturänderung von 0-70°C in 10°C Schritten.

Lupasol WF ist im unteren Temperaturbereich zu viskos und konnte somit nicht gemessen werden. Hyperverzweigte Polyetheramine zeigen eine erstaunlich niedrige Viskosität im Vergleich zu Standard Polyethyleniminen.

**Tabelle 8: Viskosität [mPas] im Vergleich mit Lupasol FG in Abhängigkeit der Temperatur**

| Temperatur [°C] | Lupasol FG | Polymer aus Beispiel 4 |
|---|---|---|
| 0 | 6100 | 9940 |
| 10 | 6950 | 3890 |
| 20 | 2450 | 1670 |
| 23 | 1850 | 1340 |
| 30 | 970 | 800 |
| 40 | 400 | 430 |
| 50 | 200 | 250 |
| 60 | 110 | 160 |
| 70 | 70 | 110 |

**Tabelle 9 Viskosität [mPas] von Polyetheramin in Abhängigkeit von der Temperatur [°C]**

| Temperatur [°C] | Lupasol WF | Polymer aus Beispiel 4 | Polymer aus Beispiel 2 |
|---|---|---|---|
| 0 | -- | 9940 | 870 |
| 10 | -- | 3890 | 1200 |
| 20 | 95800 | 1670 | 590 |
| 23 | 68600 | 1340 | 500 |
| 30 | 33900 | 800 | 300 |
| 40 | 13200 | 430 | 170 |
| 50 | 5900 | 250 | 100 |
| 60 | 2850 | 160 | 70 |
| 70 | 1500 | 110 | 50 |

### Beispiel D Untersuchung des Kantenumgriffs und des Netzverhaltens

Es wird untersucht, wie gut der Kantenumgriff und das Netzverhalten einer Test-Dispersion auf einem Blech (ASTM A 570 Gr 36) bei verschiedenen Zusätzen ist.

### Prüfsubstanzen:

a) Test-Dispersion (pH 8, 50%ige wässrige Lösung aus einem Terpolymer mit 46 Gew.-% Styrol/ 49 Gew.% Butylacetat /2, 5 Gew.% Acrylsäure /1, 7 Gew.% Acrylamid);
b) Polyetheramin aus Beispiel 4, Lupasol WF.

### Substrat:

Berghöferbleche (ST 1.0038, ASTM A 570 Gr 36).

Die Berghöferbleche werden mit 15% HCl vorgereinigt und 60 Minuten bei Raumtemperatur getrocknet. Die gereinigten Prüfkörper (7 x 10 cm) werden für 5 Sekunden in die entsprechenden Lösungen getaucht.
a) Es wird die Test-Dispersion mit verschiedenen Konzentrationen hergestellt (1 bis 15 Gew.-%, in Wasser).
b) Die Bleche werden erst in eine 5%ige Lupasol WF-Lösung getaucht und über Nacht getrocknet, danach wird die Test-Dispersion aufgebracht.
c) Das Polymer aus Beispiel 4 wird als Additiv in die Test-Dispersion (50/50 Feststoffgehalt) gegeben. Alle Bleche werden über Nacht bei Raumtemperatur getrocknet.

Das Blech wird jeweils vorher und nachher gewogen und dadurch die Schichtdicke bestimmt. Zur Bestimmung des Netzverhaltens wird der Randabstand gemessen und als min-Wert und max-Wert vermerkt. Um die Flächenbedeckung zu bestimmen, wird das Blech visuell beurteilt.

Es werden folgende Ergebnisse erhalten:
a) die Bleche, die mit Test-Dispersionen ohne Additiv behandelt wurden, zeigen einen deutlichen Kantenrückzug bei Konzentrationen des Feststoffes unter 10 %.
b) die Bleche, die mit der Test-Dispersion enthaltend das Polymer aus Beispiel 4 behandelt wurden, zeigen einen deutlich verbesserten Kantenumgriff und eine Flächenabdeckung, die sonst nur mit einer deutlich höheren FeststoffKonzentration erhalten wird.

**Tabelle 10 Netzverhalten von verschiedenen Test-Dispersions-Konzentrationen auf Metallblechen**

| Konzentration der Festkörper-Test-Dispersion [%] | Randabstand [mm] | Flächenbedeckung [%] | Schichtdicke [µm] |
|---|---|---|---|
| 1 | 2-7 | 85 | 12 |
| 2 | 2-5 | 90 | 16 |
| 5 | 1-3 | 95 | 22 |
| 10 | 1-2 | 97 | 41 |
| 15 | 1 | 98 | 70 |
| 2 mit Zusatz von 2% des Polymers aus Beispiel 4 | 1 | 98 | 64 |

## Patentansprüche

1. Verwendung hochfunktioneller, hochverzweigter Polyetheraminpolyole zur Beschichtung von Substraten.

2. Verwendung gemäß Anspruch 1, **dadurch gekennzeichnet, dass** es sich bei den Substraten um Kunststoffe, Holz, Glas, keramische Materialien oder Metall handelt.

3. Verwendung gemäß Anspruch 1, **dadurch gekennzeichnet, dass** es sich bei den Substraten um textile Materialien handelt.

4. Verwendung gemäß einem der Ansprüche 1 bis 3, **dadurch gekennzeichnet, dass** es sich bei dem hochfunktionellen, hochverzweigten Polyetheraminpolyol um ein Polymer aufgebaut aus Trialkanolamin-Monomeren und gegebenenfalls weiteren Monomer-Typen handelt.

5. Verwendung gemäß einem der Ansprüche 1 bis 4, **dadurch gekennzeichnet, dass** es sich bei dem hochfunktionellen, hochverzweigten Polyetheraminpolyol um ein Polymer aufgebaut aus Triethanolamin-Monomeren, Triisopropanolamin-Monomeren und/oder Tripropanolamin-Monomeren handelt.

6. Verwendung gemäß einem der Ansprüche 1 bis 5, **dadurch gekennzeichnet, dass** es sich bei dem hochfunktionellen, hochverzweigten Polyetheraminpolyol um ein durch Kondensation von Trialkanolamin-Monomeren unter saurer oder basischer Katalyse bei einer Temperatur von 150 bis 300° C hergestellte Polymere handelt.

7. Verwendung gemäß einem der Ansprüche 1 bis 6, **dadurch gekennzeichnet, dass** es sich bei dem hochfunktionellen, hochverzweigten Polyetheraminpolyol um Polymere handelt, die ein gewichtsgemitteltes Molekulargewicht von 2.000 bis 300.000 g/mol aufweisen.

8. Verwendung gemäß einem der Ansprüche 1 bis 7, **dadurch gekennzeichnet, dass** es sich bei dem hochfunktionellen, hochverzweigten Polyetheraminpolyol um ein Kondensationsprodukt von Triethanolamin-Monomeren und/oder Triisopropanolamin-Monomeren handelt.

9. Verfahren zur Beschichtung von Substraten mit hochfunktionellen, hochverzweigten Polyetheraminpolyolen, bei dem auf ein gegebenenfalls vorgereinigtes Substrat eine Zusammensetzung enthaltend mindestens ein hochfunktionelles, hochverzweigtes Polyetheraminpolyol aufgebracht wird.

10. Verfahren gemäß Anspruch 9, **dadurch gekennzeichnet, dass** die Menge von hochfunktionellem, hochverzweigten Polyetheraminpolyol pro Quadratmeter des Substrats 1 mg bis 1000 g beträgt.

11. Verfahren gemäß einem der Ansprüche 9 oder 10, **dadurch gekennzeichnet, dass** die Menge von hochfunktionellem, hochverzweigten Polyetheraminpolyol pro Quadratmeter des Substrats 10 mg bis 200 g beträgt.

12. Verfahren gemäß einem der Ansprüche 9 bis 11, **dadurch gekennzeichnet, dass** in der verwendeten Zusammensetzung das hochfunktionelle, hochverzweigte Polyetheraminpolyol in einer Menge von 0,1 bis 90 Gew. % vorhanden ist.

13. Verfahren gemäß einem der Ansprüche 9 bis 12, **dadurch gekennzeichnet, dass** in der verwendeten Zusammensetzung mindestens ein Lösungsmittel und das hochfunktionelle, hochverzweigte Polyetheraminpolyol in einer Menge von 0,5 bis 80 Gew. % vorhanden ist.

14. Substrat, welches mit mindestens einer Beschichtung erhältlich durch ein Verfahren gemäß einem der Ansprüche 9 bis 13 versehen ist.

15. Substrat gemäß Anspruch 14, **dadurch gekennzeichnet, dass** es sich um eine metallische Oberfläche aus Eisen, Stahl, Zink- oder Zinklegierungen, Aluminium oder Aluminiumlegierungen, Kupfer oder Kupferlegierungen handelt.

## Claims

1. The use of high-functionality highly branched polyetheramine polyols to coat substrates.

2. The use according to claim 1, wherein the substrates are plastics, wood, glass, ceramic materials or metal.

3. The use according to claim 1, wherein the substrates are textile materials.

4. The use according to any one of claims 1 to 3, wherein the high-functionality highly branched polyetheramine polyol is a polymer constructed from trialkanolamine monomers and, optionally further monomer types.

5. The use according to any one of claims 1 to 4, wherein the high-functionality highly branched polyetheramine polyol is a polymer constructed from triethanolamine monomers, triisopropanolamine monomers and/or tripropanolamine monomers.

6. The use according to any one of claims 1 to 5, wherein the high-functionality highly branched polyetheramine polyol is a polymer prepared by condensation of trialkanolamine monomers with acidic or basic catalysis at a temperature of 150 to 300°C.

7. The use according to any one of claims 1 to 6, wherein the high-functionality highly branched polyetheramine polyol comprises polymers having a weight-averaged molecular weight of 2000 to 300 000 g/mol.

8. The use according to any one of claims 1 to 7, wherein the high-functionality highly branched polyetheramine polyol is a condensation product of triethanolamine monomers and/or triisopropanolamine monomers.

9. A method of coating substrates with high-functionality highly branched polyetheramine polyols, wherein a composition comprising at least one high-functionality highly branched polyetheramine polyol is applied to a substrate which optionally has been precleaned.

10. The method according to claim 9, wherein the amount of high-functionality highly branched polyetheramine polyol per square meter of substrate is 1 mg to 1000 g.

11. The method according to either of claims 9 and 10, wherein the amount of high-functionality highly branched polyetheramine polyol per square meter of substrate is 10 mg to 200 g.

12. The method according to any one of claims 9 to 11, wherein the high-functionality highly branched polyetheramine polyol is present in an amount of 0.1% to 90% by weight in the composition used.

13. The method according to any one of claims 9 to 12, wherein at least one solvent and the high-functionality highly branched polyetheramine polyol are present in an amount of 0.5% to 80% by weight in the composition used.

14. A substrate provided with at least one coating obtainable by a method according to any one of claims 9 to 13.

15. The substrate according to claim 14, which is a metallic surface made of iron, steel, zinc or zinc alloy, aluminum or aluminum alloy, copper or copper alloy.

## Revendications

1. Utilisation de polyétheramine-polyols hautement fonctionnels, hautement ramifiés, pour l'enduction de substrats.

2. Utilisation selon la revendication 1, **caractérisée en ce que** les substrats consistent en matières plastiques, bois, verre, matières céramiques ou métal.

3. Utilisation selon la revendication 1, **caractérisée en ce que** les substrats consistent en des matières textiles.

4. Utilisation selon l'une quelconque des revendications 1 à 3, **caractérisée en ce que** le polyétheramine-polyol hautement fonctionnel, hautement ramifié consiste en un polymère constitué de monomères trialcanolamine et éventuellement d'autres types de monomères.

5. Utilisation selon l'une quelconque des revendications 1 à 4, **caractérisée en ce que** le polyétheramine-polyol hautement fonctionnel, hautement ramifié consiste en un polymère constitué de monomères triéthanolamine, monomères triisopropanolamine et/ou monomères tripropanolamine.

6. Utilisation selon l'une quelconque des revendications 1 à 5, **caractérisée en ce que** le polyétheramine-polyol hautement fonctionnel, hautement ramifié consiste en des polymères produits par condensation de monomères trialcanolamine avec catalyse acide ou basique, à une température de 150 à 300 °C.

7. Utilisation selon l'une quelconque des revendications 1 à 6, **caractérisée en ce que** le polyétheramine-polyol hautement fonctionnel, hautement ramifié consiste en des polymères qui ont une masse moléculaire moyenne en poids de 2 000 à 300 000 g/mole.

8. Utilisation selon l'une quelconque des revendications 1 à 7, **caractérisée en ce que** le polyétheramine-polyol hautement fonctionnel, hautement ramifié consiste en un produit de condensation de monomères triéthanolamine et/ou de monomères triisopropanolamine.

9. Procédé pour l'enduction de substrats avec des polyétheramine-polyols hautement fonctionnels, hautement ramifiés, dans lequel on applique sur un substrat éventuellement nettoyé au préalable une composition contenant au moins un polyétheramine-polyol hautement fonctionnel, hautement ramifié.

10. Procédé selon la revendication 9 **caractérisé en ce que** la quantité de polyétheramine-polyol hautement fonctionnel, hautement ramifié vaut de 1 mg à 1 000 g par mètre carré de substrat.

11. Procédé selon l'une quelconque des revendications 9 ou 10, **caractérisé en ce que** la quantité de polyétheramine-polyol hautement fonctionnel, hautement ramifié vaut de 10 mg à 200 g par mètre carré de substrat.

12. Procédé selon l'une quelconque des revendications 9 à 11, **caractérisé en ce que** dans la composition utilisée le polyétheramine-polyol hautement fonctionnel, hautement ramifié est présent en une quantité de 0,1 à 90 % en poids.

13. Procédé selon l'une quelconque des revendications 9 à 12, **caractérisé en ce que** dans la composition utilisée sont présents au moins un solvant et le polyétheramine-polyol hautement fonctionnel, hautement ramifié en une quantité de 0,5 à 80 % en poids.

14. Substrat, qui est muni d'au moins un revêtement pouvant être obtenu par un procédé selon l'une quelconque des revendications 9 à 13.

15. Substrat selon la revendication 14, **caractérisée en ce qu'**il s'agit d'une surface métallique de fer, acier, zinc ou alliages de zinc, aluminium ou alliages d'aluminium, cuivre ou alliages de cuivre.
